# EUROPEAN PATENT SPECIFICATION

(11) **EP 2 816 485 B1**
(45) Date of publication and mention of the grant of the patent: **03.08.2016**
(21) Application number: 14181199.2
(22) Date of filing: 02.03.2006
(51) Int. Cl.: G06F 13/362, G06F 1/32

(54) **SINGLE PORT/MULTIPLE RING IMPLEMENTATION OF A DATA SWITCH**
EINZELPORT-/MEHRFACHRINGIMPLEMENTIERUNG EINES DATENSCHALTERS
MISE EN OEUVRE D'ANNEAU MULTIPLE/PORT UNIQUE D'UN COMMUTATEUR DE DONNÉES

(30) Priority: 10.03.2005 US 77330
(43) Date of publication of application: 24.12.2014
(62) Divisional of application: 06715480.7
(73) Proprietor: Sony Interactive Entertainment Inc., Tokyo 108-0075 (JP); International Business Machines Corporation, Armonk, New York 10504 (US)
(72) Inventor: Clark, Scott Douglas, Rochester, MN 55901-1407 (US); Johns, Charles Ray, Austin, TX 78758 (US); Krolak, David John, Austin, TX 78758 (US); Yamazaki, Takeshi, Minato-ku, Tokyo 108-0075 (JP); Brown, Jeffrey Douglas, Austin, TX 78758 (US)
(74) Representative: D Young & Co LLP

(56) References cited:
- WO-A2-88/01410
- US-A1- 2002 087 763
- US-B1- 6 496 938

## Description

### TECHNICAL FIELD

The present invention relates generally to a data switch, and more particularly, to a data switch with a single port per attached unit and multiple rings.

### RELATED ART

The transmission of data between multiple processing units within a single chip can be difficult. This problem has become important due to the proliferation of a multiple processing units on a chip. There are many specific problems relating to the transmission of data between these units on the same chip. Data coherency, substantial area on the chip, and power consumption are a few problems with these transmissions of data. Furthermore, attempting to achieve higher transfer rates exacerbates these problems. Transfer rates can be an exceptional problem when the processing units are large enough that the time required to propagate a signal across one unit approaches the cycle time of the data bus in question.

Conventional methods and/or apparatuses designed to solve these problems contain substantial drawbacks. Some solutions, such as a conventional shared processor local bus, do not achieve a high enough bandwidth. This result negatively impacts the data transfer rate on the chip. Another conventional solution is a full crossbar switch. This type of switch cross connects each port to all the other ports. This means that a full crossbar switch requires N X N connections, adding to the complexity of the switch. This solution consumes too much area on the chip and requires extensive wiring resources. It is clear that a new method or apparatus is needed enable the transmission of data between multiple processing units on the same chip, while retaining a high data transfer rate.

US 2002/087763 discloses a plurality of transceivers on a ring bus. WO 88/01410 discloses a pair of ring busses having a fault tolerance system.

### DISCLOSURE OF THE INVENTION

The present invention provides a semiconductor device, and a method. This semiconductor device comprise a central arbiter; a plurality of ring buses; and a plurality of bus units that send and receive data via the ring buses, wherein the bus unit is any one of a memory controller, an ethernet controller, a processor core, a bus controller, a graphics core, wherein a first ring bus transfers data in a first direction and a second ring bus transfers data in a second direction that is different from the first direction, wherein the central arbiter issues control signals to grant a transfer of data, and wherein the transfer of data may use part of a ring bus, and characterized in that the central arbiter cuts off segments of a ring bus that are not in use so that unused segments are not clocked, thereby reducing power consumption of the semiconductor device.

Each bus unit is connected to a corresponding data ramp with a simple control interface. A controller resides on each data ramp, which controls the data transfers from the data ramp to the bus unit and the data transfers between the data ramps. The central arbiter receives requests from the bus units, arbitrates the requests, and issues control signals. The controllers interpret the control signals and transfer the data accordingly. Each data ramp is only directly connected to the two adjacent data ramps, which reduces the amount of wiring resources. The data rings form the connection between all of the data ramps. This enables this data switch to transfer data from one bus unit to any other bus unit in the memory system. In a preferred embodiment, there are four data rings, wherein two data rings transfer data clockwise and two data rings transfer data counter-clockwise.

### BRIEF DESCRIPTION OF THE DRAWINGS

For a more complete understanding of the present invention and the advantages thereof, reference is now made to the following descriptions taken in conjunction with the accompanying drawings, in which:
FIGURE 1 is a block diagram of a hybrid crossbar partially non-blocking data switch with a single port/multiple ring implementation;
FIGURE 2 is a block diagram of a ramp building block for the hybrid crossbar data switch;
FIGURE 3 is a timing diagram illustrating the data transfer process for a requesting data ramp device;
FIGURES 4A-4C are timing diagrams illustrating the data ramp controller cycles inside a data ramp device;
FIGURE 5 is a block diagram illustrating the ability of this hybrid crossbar switch to accomplish nine data transfers concurrently; and
FIGURE 6 is a flow chart depicting the process of passing one data transfer granule from a requesting device to a corresponding device.

### DETAILED DESCRIPTION

In the following discussion, numerous specific details are set forth to provide a thorough understanding of the present invention. However, those skilled in the art will appreciate that the present invention may be practiced without such specific details. In other instances, well-known elements have been illustrated in block diagram form in order not to obscure the present invention in unnecessary detail. Additionally, for the most part, details concerning network communications, electro-magnetic signalling techniques, and the like, have been omitted inasmuch as such details are not considered necessary to obtain a complete understanding of the present invention, and are considered to be within the understanding of persons of ordinary skill in the relevant art.

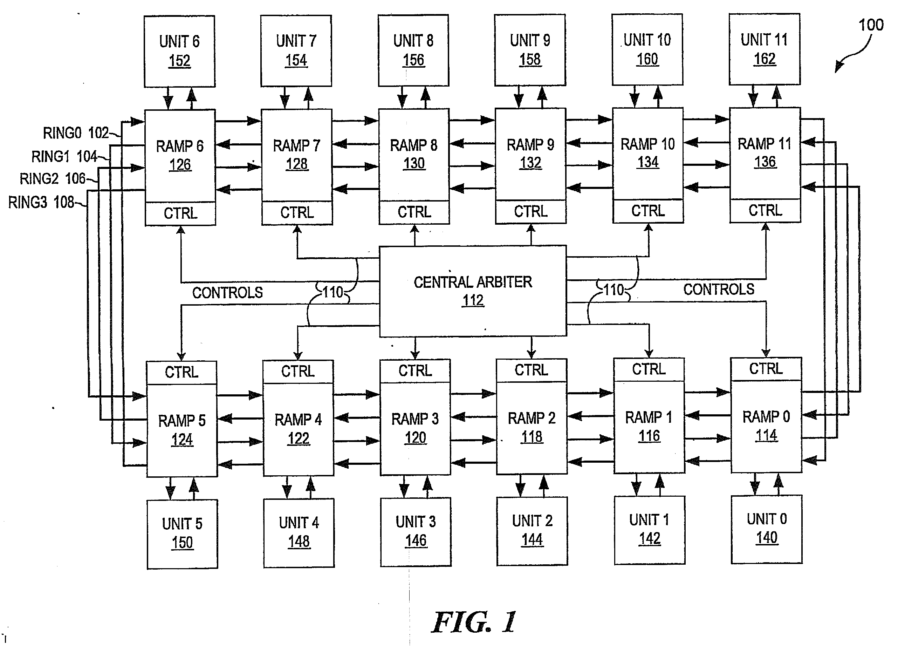

Referring to FIGURE 1 of the drawings, reference numeral 100 generally indicates a block diagram of a hybrid crossbar partially non-blocking data switch with a single port/multiple ring implementation. This hybrid crossbar switch contains four rings; Ring0 102, Ring1 104, Ring2 106, and Ring3 108. These four rings connect 12 data ramp devices; Ramp0 114, Ramp1 116, Ramp2 118, Ramp3 120, Ramp4 122, Ramp5 124, Ramp6 126, Ramp7 128, Ramp8 130, Ramp9 132, Ramp10 134, and Ramp11 136. Each data ramp device is connected to one bus unit; Unit0 140, Unit1 142, Unit2 144, Unit3 146, Unit4 148, Unit5 150, Unit6 152, Unit7 154, Unit8 156, Unit9 158, Unit10 160, and Unit 11 162, respectively. There is a central arbiter 112, which sends out control signals 110 to the data ramp devices. Each data ramp device contains a controller that interprets the control signals 110 and controls the data ramp device accordingly.

Data ramps and bus units are the devices that are described in this application, but many other similar devices may be utilized to achieve the same results as the present invention. For example, a "bus unit" is a generic term for any logical device that exchanges data with another logical device. A memory controller, an ethernet controller, a central processing unit (CPU), a peripheral component interconnect (PCI) express controller, a universal serial bus controller, and a graphics adapter unit could be a "bus unit" in this description. Furthermore, a "data ramp" is a generic term for a data transmission device in the data switch fabric.

Two data rings transfer data clockwise, Ring0 102 and Ring2 106, and two data rings transfer data counter-clockwise, Ring1 104 and Ring3 108. Each data ramp device is only connected to the two adjacent data ramp devices. For example, Ramp2 118 is only connected to Ramp1 116 and Ramp3 120. Ramp1 116 can transfer data to Ramp2 118 on Ring0 102 or Ring2 106. Ramp1 116 can receive data from Ramp2 118 on Ring1 104 or Ring3 108. Alternatively, Ramp3 120 can transfer data to Ramp2 118 on Ring1 104 or Ring3 108. Ramp3 120 can receive data from Ramp2 118 on Ring0 102 or Ring2 106. Therefore, each data ramp device can only transmit data between the data ramp devices directly adjacent to it.

The central arbiter 112 manages the flow of data around the rings, allowing the bus units to have a simple interface with the data ramp device. For example, Ramp2 118 interfaces with Unit2 144 and Ramp8 130 interfaces with Unit8 156. This connection is a Request/Grant/Receive handshake control interface. Therefore, the bus unit can only request to send data, send data when permitted, or receive data. The bus units do not need to have any awareness of the actual structure of the data switch itself. This data structure is designed to move previously agreed-upon data packets.

For example, if Unit 10 160 wanted to send data to Unit1 142 it would send out a request. The request reaches the central arbiter 112 and the arbiter 112 begins to send out control signals 110 to the necessary data ramp devices, Ramp10 134, Ramp11 136, Ramp0 114 and Ramp1 116. The central arbiter 112 also selects an available data ring, which can be Ring0 102 for this operation. Unit10 160 receives a grant from the central arbiter 112 and transmits the requested data to Ramp10 134. Ramp10 134 uses Ring0 102 to transmit this data to Ramp11 136. Ramp11 136 allows this data to pass through to Ramp0 114. Ramp0 114 allows this data to pass through to Ramp1 116. Ramp1 116 accepts this data and transmits the requested data to Unit1 142.

FIGURE 1 is only one embodiment of the present invention. The number of data ramp devices and the number of data rings can be adjusted for a specific implementation. The difference between this hybrid crossbar data switch and the conventional crossbar data switch is the amount of connections. Conventional crossbar data switches contain connections from each data ramp device to every other data ramp device. The present invention only provides for each data ramp device to be connected to the two adjacent data ramp devices.

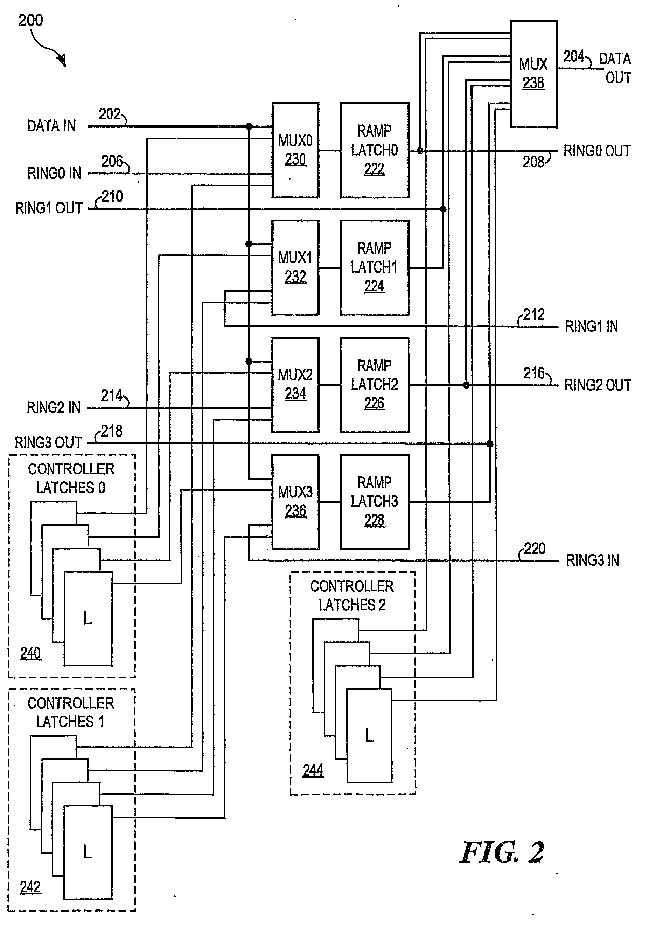

Referring to FIGURE 2 of the drawings, reference numeral 200 generally indicates a block diagram of a ramp building block for the hybrid crossbar data switch. Each data ramp device contains many of these building blocks. Data In 202 and Data Out 204 correspond to the interface between the data ramp device and the bus unit. Data In 202 refers to data received from the bus unit, and Data Out 204 refers to data transmitted to the bus unit. A multiplexor and a ramp latch are dedicated to each ring. Ramp Latch0 222 and MUX0 230 transfer data on Ring0 102. Accordingly, Ramp Latch1 224 and MUX1 232 transfer data on Ring1 104, Ramp Latch2 226 and MUX2 234 transfer data on Ring2 106, and Ramp Latch3 228 and MUX3 236 transfer data on Ring3 108.

Ring0 In 206, Ring1 In 212, Ring2 In 214, and Ring3 In 220 are inputs into MUX0 230, MUX1 232, MUX2 234, and MUX3 236, respectively. Ring0 Out 208, Ring1 Out 210, Ring2 Out 216, and Ring3 Out 218 are outputs of Ramp Latch0 222, Ramp Latch1 224, Ramp Latch2 226, and Ramp Latch3 228, respectively. The Data In 202 signal is also an input to the multiplexors, 230, 232, 234, and 236. The multiplexors, 230, 232, 234, and 236 are split in half. The upper half of the multiplexors receive the Data In 202 signal and the lower half of the multiplexors receive the ring in signals, 206, 212, 214, and 220.

The controller latches 240, 242, and 244 reside on the ramp controller. The controller latches 0 240 control the Data In signal 202 from the bus unit. If data is coming from the bus unit on the Data In 202, then the controller latches 0 240 order the correct multiplexor, 230, 232, 234, or 236 to accept the data. The controller latches 1 242 control the ring in signals, 206, 212, 214, and 220. For example, if data is coming in on the Ring1 In line 212, then the controller latches 1 242 order MUX1 232 to accept the data. Each multiplexor can only accept data from one input at a time. Therefore, if there is data coming from the bus unit on the Data In 202 to MUX1 232, then data cannot be transferred on Ring1 104 at the same time. It is the controller latches 240 and 242 that control the data flow on this data ramp.

Once the proper data channel has been selected then the multiplexors transfer the data to the ramp latches. For example, if Ring1 In data 212 has been selected by controller latches 1 242, then this data passes from MUX 1 232 to Ramp Latch1 224. Alternatively, if data from the bus unit on the Data In 202 has been selected by controller latches 0 240 to transmit on Ring2 106, then this data passes from MUX2 234 to Ramp Latch2 226.

The outputs of the ramp latches are the data out signals. Accordingly, Ramp Latch0 222 outputs Ring0 Out 208. The ramp latches outputs are also connected to another multiplexor 238. This multiplexor transmits data to the bus unit 204. The controller latches 2 244 control the multiplexor 238. For example, if the bus unit needs data from Ring3 108, then the controller latches 2 244 select the output of Ramp Latch3 228 and the multiplexor 238 transmits the data to the bus unit. If the bus unit does not need any data, then the controller latches 2 244 do not select any outputs from the ramp latches.

The controller latches, 240, 242, and 244, control the data ramp device by organizing these data transactions. Only one latch of controller latches 0 240 can be on at any given time. This means that only one ring can receive data from the bus unit at any given time. All of the latches of controller latches 1 242 can be on at any given time. Consequently, data can be transferred on all of the rings at the same time. Only one latch of controller latches 2 244 can be on at any given time. Therefore, the multiplexor 238 can only transmit data from one data ring at any given time. These sets of controller latches can control multiple ramp building blocks.

As shown in FIGURE 2, each bus unit has a send port and a receive port. These ports are connected to the data ramp devices as Data In 202 and Data Out 204, respectively. The following details are implementation specific and only describe this embodiment. These ports are each composed of a tag bus (for identifying data packets) and a data bus. The tag bus is 14 bits wide, and the data bus is 16 bytes wide. Data is transmitted in 128 byte granules (8 X 16 bytes). Each bus unit can drive data onto the bus at 16 bytes per bus cycle, and simultaneously receive data from the bus at 16 bytes per bus cycle. Therefore, the peak number of possible simultaneous transfers of 16 bytes per bus cycle is one per unit attached to the bus.

The data ramp devices provide a simple entry and exit port to the bus device's multiple ring structure. It takes one bus cycle for data to pass from the bus unit to its ramp, one bus cycle for data to pass from one data ramp to the next data ramp in the ring, and once the destination ramp is reached, it takes one bus cycle for data to pass from that data ramp to the receiving device.

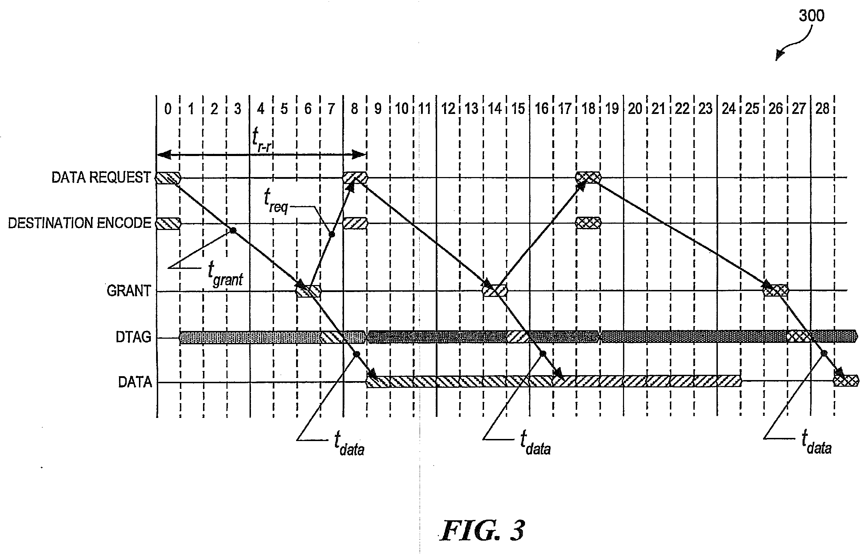

Referring to FIGURE 3 in the drawings, reference numeral 300 generally indicates a timing diagram illustrating the data transfer process for a requesting data ramp device. The following details are implementation specific and only describe this embodiment. A requesting device raises its data request line along with a destination unit ID when it requests data from its corresponding bus unit. This is shown on the Data Request line and the Destination Encode line. The central arbiter 112 arbitrates and returns a Grant pulse to the requestor and a ring-specific Grant to the corresponding data ramp controller. The Grant pulse signifies that the data transmission can begin. The minimum delay from the Data Request signal to the Grant signal (tgrant) is 6 bus cycles. The cycle after the Grant, the requester drives its DataTag on the ramp for 1 bus cycle. This DataTag identifies the data packet to follow. Three cycles after the Grant (tdata), the requester drives its Data Bus on the ramp for 8 bus cycles. Eight bus cycles signifies a whole 128 byte transfer granule. The minimum delay from Grant to the next Request (treq) is 2 bus cycles. The minimum delay from one Request to the next Request (tr-r) is 8 bus cycles. The bus unit transmits this data through the data ramp device. Overall, the bus unit propagates the Request to the central arbiter, the central arbiter sends back a Grant, and the bus unit configures the DataTag signal and sends the data.

In this process the central arbiter 112 also sends flow control signals to the downstream data ramp devices. For the receiving data ramp device, the central arbiter sends an Early Data Valid (EDV) pulse. The EDV pulse is similar to the Grant pulse, but it cues the receiver to accept data. The receiver captures the DataTag signal from the requesting ramp output for one cycle. One cycle after the EDV pulse the receiver captures the DataTag data from the tag bus, and 3 cycles after the EDV pulse the receiver collects data for 8 cycles (one granule). The controller housed on the data ramp device receives a bus-specific EDV pulse and controls the ramp output multiplexors with the same timing constraints.

During a data transfer data ramps are also utilized as passthrough devices. This entails that the specific data ramp device is only passing data to the next data ramp. The central arbiter 112 sends out passthrough pulses for data transfers that must traverse one or more data ramps. A data ramp receiving a passthrough pulse passes data from the specified ring input to its output for 8 cycles, starting 1 cycle after the pulse is received for the Tag Bus and 3 cycles for the Data Bus.

The central arbiter 112 controls this whole process. It collects the requests, arbitrates between them, chooses an appropriate ring, and grants the requests. The arbiter 112 does not grant requests if the new data transfer conflicts with another transfer that is already in progress. If part of a ring is in use by a transfer, it allows non-overlapping transfers to exist concurrently on other parts of the ring or it allows the new transfer to follow sequentially after the trailing edge of the prior transfer. For this embodiment there is also an error bit and a partial transfer bit that is transmitted with the data packets. The error bit indicates whether there is an error with the data, and it is transferred with the data on the data bus. The partial transfer bit indicates if the data transfer is less than 128 bytes, and it is transferred with the data on the tag bus.

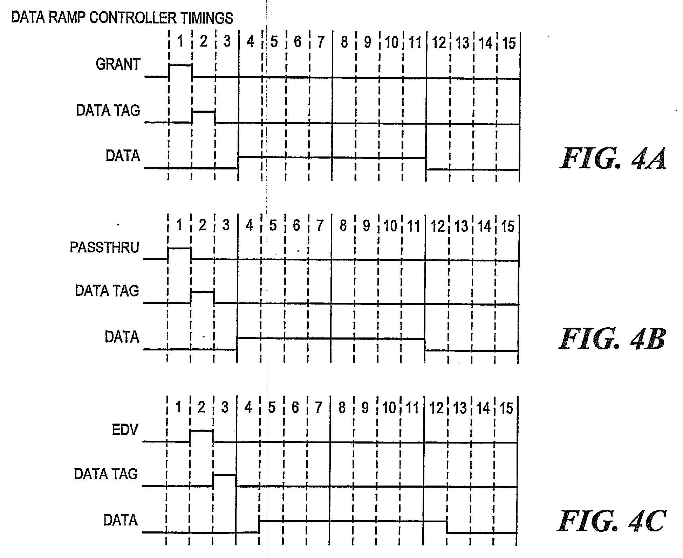

Referring to FIGURES 4A-4C of the drawings, three timing diagrams illustrate the data ramp controller cycles inside a data ramp device. The first timing diagram, FIG. 4A, illustrates the transfer of data for a requesting data ramp device. The grant pulse is received at cycle number 1. One cycle later the DataTag pulse is driven on the tag bus for one cycle. Three pulses after the grant pulse the data is driven on the data bus for 8 cycles. Cycle number 9 is the earliest cycle that can receive another grant pulse from any ring.

The second timing diagram, FIG. 4B, illustrates the transfer of data for the passthrough data ramp device. The passthrough pulse is received at cycle number 1. One cycle later the DataTag pulse is driven on the tag bus for one cycle. Three pulses after the passthrough pulse the data is driven on the data bus for 8 cycles. Cycle number 9 is earliest cycle that can receive another passthrough pulse from the same ring.

The third timing diagram, FIG. 4C, illustrates the transfer of data for the receiving data ramp device. The EDV pulse is received at cycle number 2. One cycle later the DataTag pulse is driven on the tag bus for one cycle. Three pulses after the EDV pulse the data is driven on the data bus for 8 cycles. Cycle number 10 is the earliest cycle that can receive another EDV pulse from any ring.

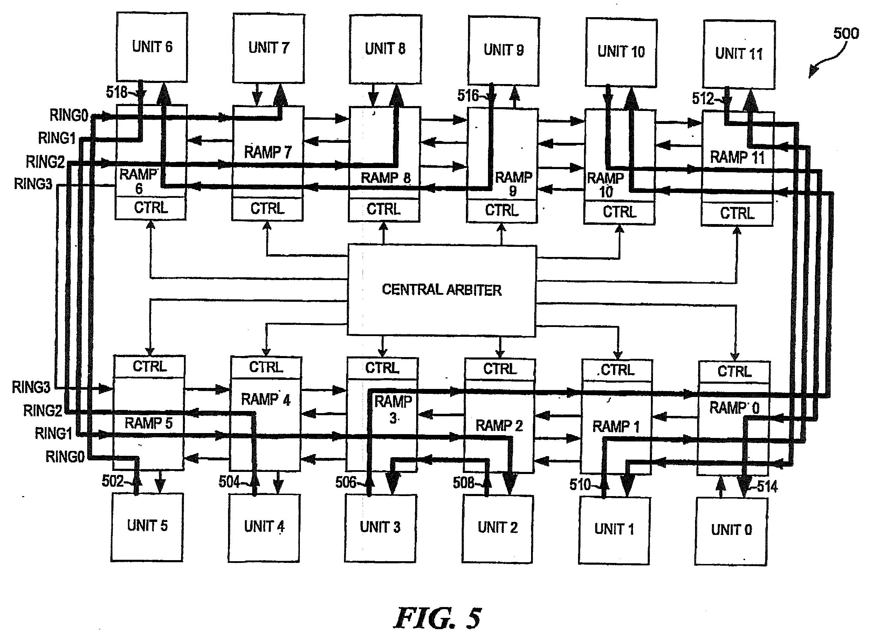

Referring to FIGURE 5 of the drawings, reference numeral 500 generally indicates a block diagram illustrating the ability of this hybrid crossbar switch to accomplish nine data transfers concurrently. FIGURE 5 is the same illustration as FIGURE 1 without reference numerals for all the components. Data path 502 signifies a data transfer from Unit 5 to Unit 7 on Ring0. Data path 504 signifies a data transfer from Unit 4 to Unit 8 on Ring2. Data path 506 signifies a data transfer from Unit 3 to Unit 10 on Ring3. Data path 508 signifies a data transfer from Unit 2 to Unit 3 on Ring0. Data path 510 signifies a data transfer from Unit 1 to Unit 11 on Ring1. Data path 512 signifies a data transfer from Unit 11 to Unit 1 on Ring0. Data path 514 signifies a data transfer from Unit 10 to Unit 0 on Ring2. Data path 516 signifies a data transfer from Unit 9 to Unit 6 on Ring3. Data path 518 signifies a data transfer from Unit 6 to Unit 2 on Ring1. These 9 data transfers can be accomplished concurrently without any conflicts.

The following details are implementation specific and only apply to this embodiment. Data transfer 516 begins with Unit 9 raising its data request line along with the destination unit ID. In this case the destination unit ID would identify Unit 6. The central arbiter collects this request and sends a grant to Unit 9 and Unit 6. Unit 9 then sends datatag data on the tag bus and subsequently sends data on the data bus to Ramp 9. Ramp 9 outputs this data on Ring3. Ramps 8, 7, and 6 receive passthrough signals to allow this data to pass through on Ring3. The datatag data on the tag bus and the data on the data bus pass through Ramp 8, Ramp 7 and Ramp 6 on Ring3. During this process the central arbiter sends an EDV to Ramp 6. After the data has passed through Ramp 6, the controller on Ramp 6 passes the output to Unit 6. This is how a packet of data is transferred from Unit 9 to Unit 6 on Ring3. The procedure for data input and output between the bus unit and the ramp is shown in FIGURE 2. FIGURE 2 also illustrates the mechanics of a pass through operation.

This invention provides many advantages over the prior art. This hybrid crossbar data switch consumes less silicon area on the chip. Because each ramp is only interfacing with two other ramps the amount of logic and buses on the data chip is reduced. Only four sets of buses (rings) are needed, which also limits the corresponding logic to save space. This invention also drastically reduces the amount of wiring tracks. For a conventional crossbar data switch each port must be wired to every other port. For this modified crossbar switch each ramp only requires connections between adjacent data ramps. Furthermore, this modified crossbar switch retains a high peak bandwidth. As shown in FIGURE 5, large amounts of data can be transferred concurrently. This modified crossbar also uses less power than the conventional apparatuses. The central arbiter cuts off segments or data ramp devices of the data rings if they are not in use. Therefore, the unused segments are not clocked, which reduces power consumption. It is clear that this single port/multiple ring implementation of a hybrid crossbar partially non-blocking data switch is a vast improvement over the prior art devices.

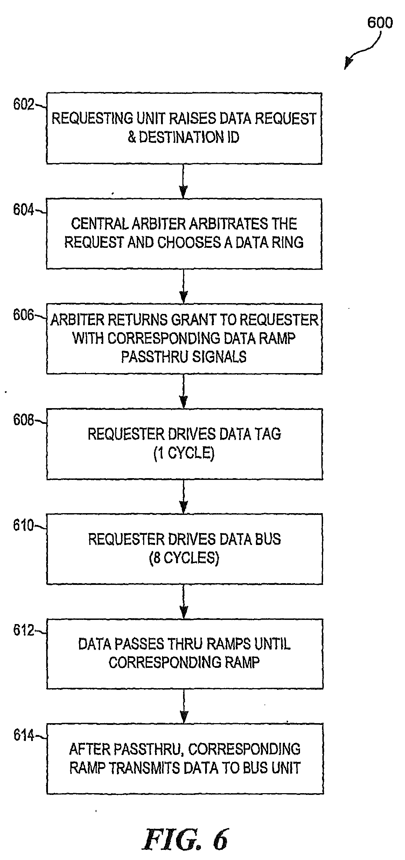

Referring to FIGURE 6 of the drawings, reference numeral 600 generally indicates a flow chart depicting the process of passing one data transfer granule from a requesting device to a corresponding device. The requesting device raises the data request and destination ID lines 602 to indicate a data transfer. The central arbiter receives the data request, arbitrates the request, and chooses a data ring 604. The central arbiter then returns a grant to the requestor, a grant to the corresponding device, and passthrough signals 606. After receiving the grant, the requester drives the data tag for one cycle 608. Then the requester drives the data bus for eight cycles 610. The data tag data and the transfer data pass through the data ramps until reaching the corresponding data ramp 612. Once the data passes through the corresponding data ramp, the data is transmitted to the corresponding bus unit 614.

In the above example, the requester resides in the sender side of the data. However, the requester may reside in the receiver side.

It is understood that the present invention can take many forms and embodiments. Accordingly, several variations of the present design may be made without departing from the scope of the invention. The capabilities outlined herein allow for the possibility of a variety of programming models. This disclosure should not be read as preferring any particular programming model, but is instead directed to the underlying concepts on which these programming models can be built.

Having thus described the present invention by reference to certain of its preferred embodiments, it is noted that the embodiments disclosed are illustrative rather than limiting in nature and that a wide range of variations, modifications, changes, and substitutions are contemplated in the foregoing disclosure and, in some instances, some features of the present invention may be employed without a corresponding use of the other features. Many such variations and modifications may be considered desirable by those skilled in the art based upon a review of the foregoing description of preferred embodiments. Accordingly, it is appropriate that the appended claims be construed broadly and in a manner consistent with the scope of the invention.

### INDUSTRIAL APPLICABILITY

The present invention is used in the technical field of a data switch, and more particularly, of a data switch with a single port per attached unit and multiple rings.

## Claims

1. A semiconductor device comprising:
a central arbiter (112);
a plurality of ring buses (102, 104, 106, 108); and
a plurality of bus units (140, 142, ...162) that send and receive data via the ring buses,
wherein the bus unit is any one of a memory controller, an ethernet controller, a processor core, a bus controller, a graphics core,
wherein a first ring bus transfers data in a first direction and a second ring bus transfers data in a second direction that is different from the first direction,
wherein the central arbiter issues control signals to grant a transfer of data, and
wherein the transfer of data may use part of a ring bus,
and **characterized in that** the central arbiter cuts off segments of a ring bus that are not in use so that unused segments are not clocked, thereby reducing power consumption of the semiconductor device.

2. The semiconductor device of Claim 1, further comprising a plurality of data transmission devices (114, 116, ...136), wherein each of the plurality of data transmission devices interfaces a corresponding bus unit of the plurality of bus units through at least one of a plurality of communication channels, and wherein the ring provides a data connection between the plurality of data transmission devices, and wherein each data transmission device is connected by the ring to the two adjacent data transmission devices.

3. The semiconductor device of Claim 2, wherein each bus unit of the plurality of bus units interfaces one data transmission device of the plurality of data transmission devices.

4. The semiconductor device of Claim 2 or Claim 3, wherein each data transmission device of the plurality of data transmission devices comprises:
a controller device;
a plurality of multiplexers (230, 232, ...236); and
a plurality of latches (222, 224, ...228).

5. The semiconductor device of Claim 4, wherein the controller device is at least configured to manage the transfer of data on the data ring structure and the transfer of data on the communication channels associated with the corresponding bus unit, in response to control signals.

6. A method for transferring data on a semiconductor device, wherein the semiconductor device comprising:
a central arbiter (112);
a plurality of ring buses (102, 104, 106, 108); and
a plurality of bus units (140, 142, ...162) that send and receive data via the ring buses, the method comprising:
transferring data in a first direction through a first ring bus;
transferring data in a second direction that is different from the first direction through a second ring bus; and
the central arbiter issuing control signals to grant a transfer of data,
wherein the transfer of data may use part of a ring bus,
and **characterized by**
the central arbiter cutting off segments of a ring bus that are not in use so that unused segments are not clocked, thereby reducing power consumption of the semiconductor device.

## Patentansprüche

1. Halbleitervorrichtung, umfassend:
einen zentralen Arbiter (112);
eine Mehrzahl von Ringbussen (102, 104, 106, 108); und
eine Mehrzahl von Buseinheiten (140, 142, ...162), welche Daten über die Ringbusse senden und empfangen,
wobei die Buseinheit ein beliebiges von einer Speichersteuerung, einer Ethernet-Steuerung, einem Prozessorkern, einer Bussteuerung, einem Grafikkern ist,
wobei ein erster Ringbus Daten in einer ersten Richtung überträgt und ein zweiter Ringbus Daten in einer zweiten Richtung, welche sich von der ersten Richtung unterscheidet, überträgt,
wobei der zentrale Arbiter Steuersignale ausgibt, um eine Übertragung von Daten zu genehmigen, und
wobei die Übertragung von Daten einen Teil von einem Ringbus verwenden kann,
und **dadurch gekennzeichnet, dass** der zentrale Arbiter Segmente von einem Ringbus abschneidet, welche nicht in Verwendung sind, so dass nicht verwendete Segmente nicht getaktet werden, wodurch der Leistungsverbrauch der Halbleitervorrichtung reduziert wird.

2. Halbleitervorrichtung nach Anspruch 1, ferner umfassend eine Mehrzahl von Datenübertragungsvorrichtungen (114, 116, ...136), wobei jede von der Mehrzahl von Datenübertragungsvorrichtungen über eine Schnittstelle mit einer entsprechenden Buseinheit von der Mehrzahl von Buseinheiten durch wenigstens einen von einer Mehrzahl von Kommunikationskanälen verbunden ist, und wobei der Ring eine Datenverbindung zwischen der Mehrzahl von Datenübertragungsvorrichtungen bereitstellt, und wobei jede Datenübertragungsvorrichtung durch den Ring mit den zwei benachbarten Datenübertragungsvorrichtungen verbunden ist.

3. Halbleitervorrichtung nach Anspruch 2, wobei jede Buseinheit von der Mehrzahl von Buseinheiten über eine Schnittstelle mit einer Datenübertragungsvorrichtung von der Mehrzahl von Datenübertragungsvorrichtungen verbunden ist.

4. Halbleitervorrichtung nach Anspruch 2 oder Anspruch 3, wobei jede Datenübertragungsvorrichtung von der Mehrzahl von Datenübertragungsvorrichtungen umfasst:
eine Steuerungsvorrichtung;
eine Mehrzahl von Multiplexern (230, 232, ...236); und
eine Mehrzahl von Latches (222, 224, ...228).

5. Halbleitervorrichtung nach Anspruch 4, wobei die Steuerungsvorrichtung wenigstens ausgelegt ist, um die Übertragung von Daten auf der Datenringstruktur und die Übertragung von Daten auf den Kommunikationskanälen zu verwalten, welche mit der entsprechenden Buseinheit assoziiert sind, in Reaktion auf Steuersignale.

6. Verfahren zum Übertragen von Daten auf einer Halbleitervorrichtung, die Halbleitervorrichtung umfassend:
einen zentralen Arbiter (112);
eine Mehrzahl von Ringbussen (102, 104, 106, 108); und
eine Mehrzahl von Buseinheiten (140, 142, ...162), welche Daten über die Ringbusse senden und empfangen, das Verfahren umfassend:
Übertragen von Daten in einer ersten Richtung durch einen ersten Ringbus;
Übertragen von Daten in einer zweiten Richtung, welche sich von der ersten Richtung unterscheidet, durch einen zweiten Ringbus; und
Ausgeben von Steuersignalen durch den zentralen Arbiter, um eine Übertragung von Daten zu genehmigen,
wobei die Übertragung von Daten einen Teil von einem Ringbus verwenden kann, und **gekennzeichnet durch**
Abschneiden von Segmenten von einem Ringbus **durch** den zentralen Arbiter, welche nicht in Verwendung sind, so dass nicht verwendete Segmente nicht getaktet werden, wodurch der Leistungsverbrauch der Halbleitervorrichtung reduziert wird.

## Revendications

1. Dispositif à semi-conducteur comprenant :
un arbitre central (112) ;
une pluralité de bus en anneau (102, 104, 106, 108) ;
et
une pluralité d'unités de bus (140, 142, ... 162) qui transmettent et reçoivent des données par l'intermédiaire des bus en anneau,
où l'unité de bus est un dispositif quelconque parmi un contrôleur de mémoire, un contrôleur Ethernet, un coeur de processeur, un contrôleur de bus, un chipset graphique, et
où un premier bus en anneau transfère des données dans une première direction et un second bus en anneau transfère des données dans une seconde direction qui est différente de la première direction,
où l'arbitre central délivre des signaux de contrôle pour octroyer un transfert de données, et
où le transfert de données peut utiliser une partie d'un bus en anneau,
et **caractérisé en ce que** l'arbitre central coupe des segments d'un bus en anneau qui ne sont pas utilisés de manière à ce que des segments inutilisés ne soient pas synchronisés, en réduisant ainsi la consommation électrique du dispositif à semi-conducteur.

2. Dispositif à semi-conducteur selon la revendication 1, comprenant en outre une pluralité de dispositifs de transmission de données (114, 116, ... 136), où chacun de la pluralité de dispositifs de transmission de données sert d'interface à une unité de bus correspondante de la pluralité d'unités de bus par l'intermédiaire d'au moins un canal d'une pluralité de canaux de communication, et où l'anneau fournit une connexion de données entre la pluralité de dispositifs de transmission de données, et où chaque dispositif de transmission de données est connecté par l'anneau aux deux dispositifs de transmission de données adjacents.

3. Dispositif à semi-conducteur selon la revendication 2, dans lequel chaque unité de bus de la pluralité d'unités de bus sert d'interface à un dispositif de transmission de données de la pluralité de dispositifs de transmission de données.

4. Dispositif à semi-conducteur selon la revendication 2 ou la revendication 3, dans lequel chaque dispositif de transmission de données de la pluralité de dispositifs de transmission de données comprend :
un dispositif contrôleur ;
une pluralité de multiplexeurs (230, 232, ... 236) ; et
une pluralité de bascules (222, 224, ... 228).

5. Dispositif à semi-conducteur selon la revendication 4, dans lequel le dispositif contrôleur est au moins configuré pour gérer le transfert des données sur la structure en anneau de données et le transfert des données sur les canaux de communication associés à l'unité de bus correspondante, en réponse aux signaux de contrôle.

6. Procédé pour transférer des données sur un dispositif à semi-conducteur, où le dispositif à semi-conducteur comprend :
un arbitre central (112) ;
une pluralité de bus en anneau (102, 104, 106, 108) ;
et
une pluralité d'unités de bus (140, 142, ... 162) qui transmettent et reçoivent des données par l'intermédiaire des bus en anneau, le procédé comprenant les étapes suivantes :
transférer des données dans une première direction par l'intermédiaire d'un premier bus en anneau ;
transférer des données dans une seconde direction qui est différente de la première direction par l'intermédiaire d'un second bus en anneau ; et
l'arbitre central délivrant des signaux de contrôle pour octroyer un transfert de données,
où le transfert de données peut utiliser une partie d'un bus en anneau,
et **caractérisé par**
l'arbitre central coupant des segments d'un bus en anneau qui ne sont pas utilisés de manière à ce que des segments inutilisés ne soient pas synchronisés, en réduisant ainsi la consommation électrique du dispositif à semi-conducteur.
